# EUROPÄISCHE PATENTANMELDUNG

(11) **EP 0 617 176 A1**
(43) Veröffentlichungstag der Anmeldung: **28.09.1994**
(21) Anmeldenummer: 94102359.0
(22) Anmeldetag: 17.02.1994
(51) Int. Cl.: E03F 5/16, G01N 1/10

(54) **Abscheider zum Trennen von Flüssigkeitsgemischen**

(30) Priorität: 20.02.1993 DE 4305354
(71) Anmelder: BETONWERK NEETZE GmbH & Co. KG, D-21398 Neetze (DE)
(72) Erfinder: Victor, Heinz, D-21481 Lauenburg (Elbe) (DE); Coerdt, Roland, D-21398 Neetze (DE)
(74) Vertreter: Eisenführ, Speiser & Partner

(57) **Zusammenfassung**

Die Erfindung betrifft einen Abscheider zur Trennung von Flüssigkeitsgemischen mit einem Becken, das einen Einlauf, einen Abscheidebereich und einen Auslaufkasten zu einem Klarwasserablauf aufweist. In dem Klarwasserablauf ist eine Probennahmeeinrichtung (7) vorgesehen, die erfindungsgemäß aus einem vom Klarwasser durchströmten Rohrkörper (8) besteht, der zur Probennahme durch eine Verschlußeinrichtung (10) in Durchströmrichtung verschließbar und somit in ein die Probe speicherndes Gefäß verwandelbar ist.

## Beschreibung

Die Erfindung betrifft einen Abscheider zum Trennen von Flüssigkeitsgemischen, insbesondere zum Abscheiden von spezifisch leichteren Flüssigkeiten wie Öl, Benzin oder dergleichen, aus Wasser, bestehend aus einem Becken mit einem Einlauf, einem an diesen anschließenden Abscheidebereich ggf. mit Einbauten, einem vom Abscheidebereich zu einem Klarwasserablauf führenden Auslaufkasten und einer in einem oberen Bereich des Auslaufkastens gelegenen Probennahmeeinrichtung.

Abscheider dieser Art werden verwendet, um das mit Leichtflüssigkeiten verunreinigte Abwasser von diesen Bestandteilen zu befreien, bevor es in die Kanalisation eingeleitet wird. Die Leichtflüssigkeitsabscheider sind üblicherweise als Schwerkraftabscheider oder als Koaleszenzabscheider ausgebildet. Um den Reinigungsgrad des in dem Abscheider behandelten Abwassers zu überprüfen und die ordnungsgemäße Funktion des Abscheiders zu gewährleisten, ist in den Abscheideranlagen eine Probenahmemöglichkeit vorgesehen. Die Probennahme kann entweder durch einen der Abscheideranlage nachgeschalteten Probenentnahmebehälter oder eine innerhalb des Behälters des Flüssigkeitsabscheiders im Bereich des Auslaufs angeordnete Probenentnahmevorrichtung erfolgen.

Das DE-GM 91 05 210 beschreibt einen Abscheider der eingangs genannten Art, bestehend aus einem Behälter mit einem Einlauf und einem gegenüber dem Einlauf liegenden Auslauf, einem an den Einlauf anschließenden Abscheidebereich, einem von diesem zum Auslauf reichenden Ablaufschacht und einer Probennahmevorrichtung, die im Bereich des Auslaufs innerhalb des Behälters angeordnet ist. Die Probennnahmevorrichtung weist einen Probennahmeschacht auf, der am oberen Ende des Ablaufschachtes an diesen angeschlossen ist. Die Probennahme wird durchgeführt, indem ein Probennahmegefäß in den Probennahmeschacht so weit eingeführt wird, bis es mit der gereinigten Flüssigkeit gefüllt ist. Anschließend wird das Probennahmegefäß aus dem Probennahmeschacht entnommen. Die ständige Anordnung eines entsprechenden Probennahmegefäßes in dem Probennahmeschacht hat den Nachteil, daß nicht das gegenwärtig abfließende Klarwasser untersucht wird, sondern eine ältere Probe, die unmittelbar nach dem Einführen des Probennahmegefäßes in den Probennahmeschacht in das Gefäß gefüllt wurde. Außerdem muß die zur Vermeidung des Eindringens von Verunreinigungen in den Probennahmeschacht vorgesehene lösbare Abdeckung zur Probennahme entfernt werden, wodurch Verschmutzungen in die Probenflüssigkeit gelangen können. Schließlich ist die Handhabung des Probennahmegefäßes nicht sehr komfortabel.

Die Erfindung hat sich die Aufgabe gestellt, einen Abscheider der eingangs genannten Art mit einer integrierten Probennahmeeinrichtung zu schaffen, die einfach und komfortabel zu bedienen ist, das Eindringen von Verunreinigungen in die Probe während der Probenentnahme verhindert und ständig eine aktuelle Probe des zum Probennahmezeitpunktes abfließenden Klarwassers zur Verfügung stellt.

Die Aufgabe wird erfindungsgemäß dadurch gelöst, daß die Probennahmeeinrichtung aus einem vom Klarwasser in Längsrichtung durchströmten Rohrkörper besteht, der lösbar an einer oberen Begrenzung des Auslaufkastens angeordnet ist, und daß der Rohrkörper an seinem unteren Ende zur Probennahme durch eine Verschlußeinrichtung in Durchströmrichtung verschließbar und in ein die Probe speicherndes Gefäß verwandelbar ist.

Die Probennahmeeinrichtung ist normalerweise ständig in dem Auslaufkasten des Abscheiders angeordnet und wird, wenn keine Probennahme vorgesehen ist, von dem zum Auslaß strömenden Klarwasser in Längsrichtung durchströmt. Zur Probennahme wird die aus einem Rohrkörper bestehende Probennahmeeinrichtung in Durchströmrichtung durch eine geeignete Einrichtung verschlossen und in ein die Probe speicherndes, geschlossenes Gefäß verwandelt. Damit ist gewährleistet, daß auch die zum Zeitpunkt der Probennahme zum Auslaß fließende Flüssigkeit als Probe entnommen wird und somit ein aktuelles Ergebnis des Reinigungseffektes des Abwassers gewonnen wird. Die Probennahme selbst erfordert nur wenige Handgriffe, und das Probennahmegefäß kann sofort nach der Probennahme in seine Ausgangsstellung zurückgebracht werden, so daß es ständig für neue Probennahmen zur Verfügung steht.

Vorzugsweise ist die Verschlußeinrichtung gegen die Kraft einer in Schließstellung wirkenden Feder durch eine Verriegelungseinrichtung in der geöffneten Stellung gehalten. Zur Probennahme wird der Rohrkörper mit dem Verschlußdeckel verschlossen aus dem Auslaufkasten entnommen, so daß Verunreinigungen der Probe bei der Probennahme ausgeschlossen sind.

In einer bevorzugten Ausführungsform der Erfindung ist die Verschlußeinrichtung eine in Längsrichtung des Rohrkörpers bewegbare Verschlußplatte, die stirnseitig außerhalb des Rohrkörpers angeordnet ist und in ihrem Durchmesser etwa dem Außendurchmesser des Rohrkörpers entspricht.

Vorzugsweise ist die Verschlußplatte an einer durch den Rohrkörper bis zu einer Oberkante des Abscheiders geführten Betätigungsstange aufgehängt, mit der die Verriegelungseinrichtung und die Druckfeder zusammenwirkt. Im verriegelten Zustand steht die Verschlußplatte von dem Rohrkörper ab, so daß das Rohr durchströmt wird. Bei gelöster Verriegelung wird die Verschlußplatte durch die Federkraft der an der Stange angreifenden Druckfeder von außen an die Stirnfläche des Rohrs gedrückt und bildet so ein Gefäß, das mit der eingeströmten Probenflüssigkeit gefüllt ist. Die Stange besitzt an ihrem oberen Ende vorzugsweise einen Griff, mit dessen Hilfe die Entnahme und das Wiedereinsetzen des Rohrkörpers auf einfache Art und Weise möglich ist. Da die Stange mit dem Griff bis zur Oberkante des Abscheiders geführt ist, ist eine leicht zugängliche Bedienung des Probennehmers gewährleistet.

Um ein gleichmäßiges ruhiges Durchströmen des Rohrkörpers zu erreichen und die Stange zu führen, kann der Rohrkörper in seinem Inneren an dem in den Auslaufkasten ragenden Ende mit einer mit Öffnungen versehenen Scheibe ausgerüstet sein.

Wenn der Rohrkörper gemäß einer bevorzugten Ausführungsform der Erfindung mit einem oberen Verschlußdeckel versehen ist, sind nahe dem Verschlußdeckel in der Wandung des Rohrkörpers eine oder mehrere Auslaßöffnungen vorzusehen, um das Durchströmen des Rohrkörpers zu ermöglichen.

Um das Auslaufen von Probeflüssigkeit nach dem Andrücken der unteren Platte an den Rohrkörper bei der Probennahme zu verhindern, ist die Platte auf ihrer dem Rohrkörper zugewandten Seite mit einer Dichtung versehen.

Weitere Ausbildungen und Merkmale der Erfindung sind den Unteransprüchen zu entnehmen. Die vorliegende Erfindung ist sowohl für Koaleszenzabscheider als auch für Schwerkraftabscheider, wie z.B. Benzinabscheider, der eingangs genannten Art anwendbar.

Nachstehend ist die Erfindung anhand von in den Zeichnungen wiedergegebenen Ausführungsbeispielen beschrieben. Die Zeichnungen zeigen:
- Figur 1: eine Draufsicht auf eine Ausführungsform eines Abscheiders;
- Figur 2: einen Längsschnitt durch den Flüssigkeitsabscheider gemäß Figur 1 entlang der Linie A-A; und
- Figur 3: einen Längsschnitt durch eine Ausführungsform einer erfindungsgemäßen Probennahmeeinrichtung.

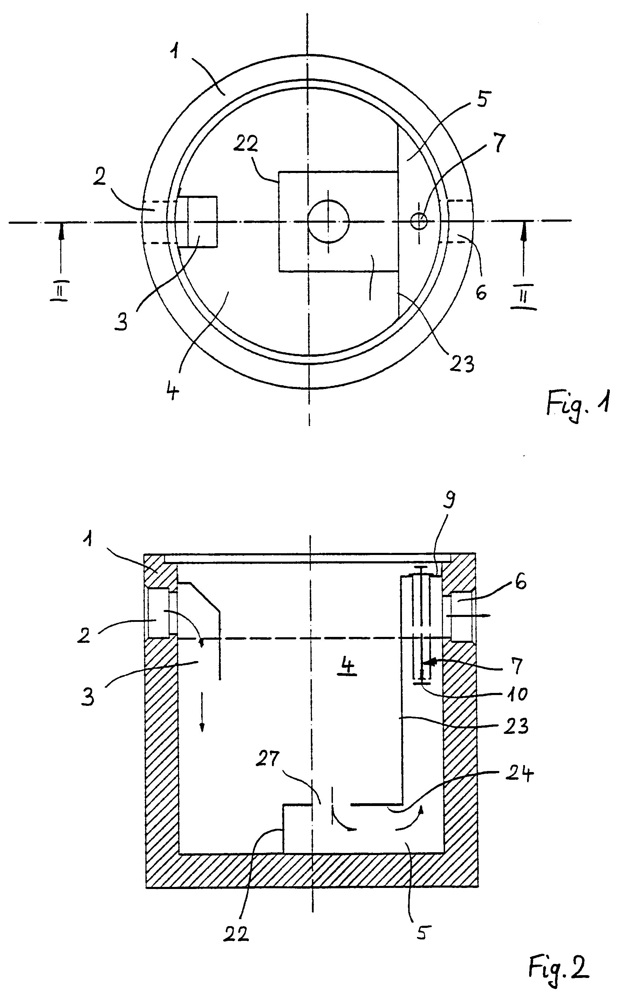

Der in den Figuren 1 und 2 dargestellte Flüssigkeitsabscheider weist ein Becken 1 mit einem kreisrunden Querschnitt auf. In einem oberen Abschnitt des Beckens 1 ist ein Einlauf 2 angeordnet, dem sich ein Einlaufkasten 3 anschließt. Der sich an den Einlaufkasten 3 anschließende Abscheidebereich 4 kann mit Einbauten, wie z.B. Leit- oder Trennwänden, oder Koaleszenzfiltern im Fall von Koaleszenzabscheidern, versehen sein. Weiterhin weist das Becken 1 einen Auslaufkasten 5 auf, der durch vertikale Wände 22 und 23 und eine im wesentlichen horizontale und parallel zum Beckenboden verlaufende Platte 24 mit einer Öffnung 27 vom Abscheidebereich 4 getrennt ist. Der Auslaufkasten 5 führt zu einem gegenüber dem Einlauf 2 und etwa in gleicher Höhe wie dieser liegenden Klarwasserauslauf 6.

In dem senkrecht nach oben zum Auslauf 6 führenden Teil des Auslaufkastens 5 ist eine Probennahmeeinrichtung 7 angeordnet. Die Probennahmeeinrichtung 7 ist lösbar in einer Öffnung der oberen Begrenzung 9 des Auslaufkastens 5 angeordnet und ragt mit einem Rohrkörper 8 von der Begrenzung 9 nach unten in den Auslaufkasten 5 hinein. Der Rohrkörper 8 ist durch eine Verschlußplatte 10 am unteren Ende verschließbar. In Figur 2 ist die Probennahmeeinrichtung im verriegelten Zustand gezeigt, d.h., die untere Verschlußplatte 10 steht vom Rohrkörper 8 ab, so daß der Rohrkörper von dem zum Auslauf 6 fließenden Klarwasser durchströmt wird.

Um eine möglichst lange Verweilzeit des Abwassers in dem Abscheidebereich 4 zu erreichen, können in diesem Leit- oder Trennwände vorgesehen werden. Außerdem kann in dem Abscheidebereich 4 ein Koaleszenzfilter angeordnet sein, um einen besseren Reinigungsgrad des Flüssigkeitsgemisches zu erreichen.

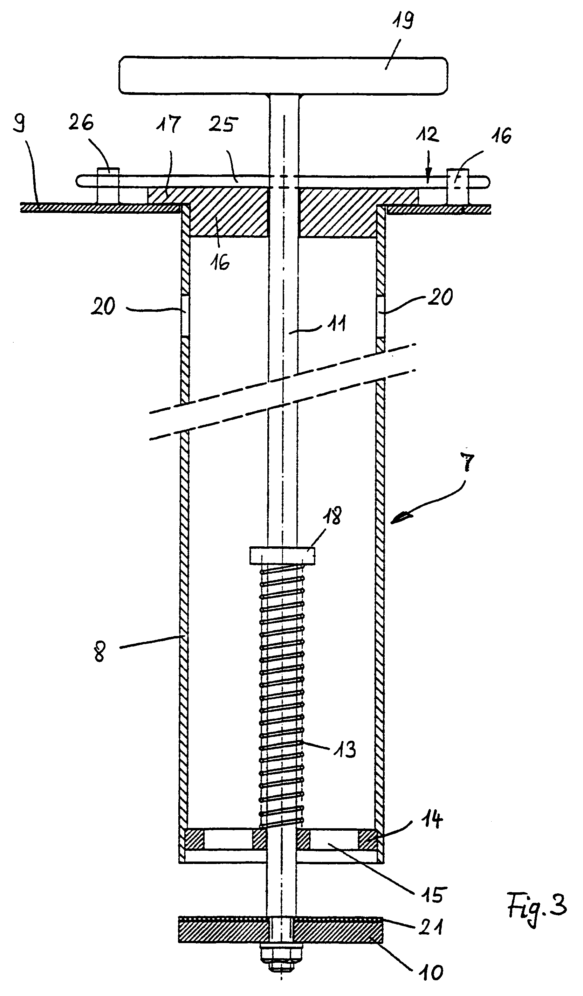

Eine Ausführungsform der erfindungsgemäßen Probennahmeeinrichtung 7 ist in Figur 3 dargestellt. Die Probennahmeeinrichtung 7 weist einen Rohrkörper 8 auf, der parallel zur der vertikalen Wand 22 des Auslaufkastens 5 angeordnet ist. An seinem oberen Ende ist der Rohrkörper 8 mit einem Verschlußdeckel 16 verschlossen. Der Verschlußdeckel 16 besitzt einen äußeren Flansch 17, mittels dessen der Rohrkörper 8 in eine Öffnung in der oberen Begrenzung 9 des Auslaufkastens 5 in den Auslaufkasten 5 eingehängt ist. Nahe dem Verschlußdeckel 16 sind in der Wandung des Rohrkörpers 8 einander gegenüberliegend zwei Auslaßöffnungen 20 vorgesehen. An dem in den Auslaufkasten 5 hineinragenden Ende des Rohrkörpers 8 ist im Inneren des Rohrkörpers 8 eine Scheibe 14, die mit Öffnungen 15 versehen ist, angeordnet. Außerhalb des Rohrkörpers 8 ist eine Verschlußplatte 10 vorgesehen, die auf ihrer dem Rohrkörper 8 zugewandten Seite mit einer in Längsrichtung durch den Rohrkörper 8 führenden und bis zur Oberkante des Beckens 1 reichenden Betätigungsstange 11 verbunden ist. Zum besseren Abdichten und Verschließen des Rohrkörpers 8 für die Probennahme ist die Verschlußplatte 10 auf der dem Rohrkörper 8 zugewandten Seite mit einer die gesamte Fläche der Verschlußplatte 10 abdeckenden Dichtung 21 versehen. Die Betätigungsstange 11 wird durch entsprechende Öffnungen im Verschlußdeckel 16 und der Scheibe 14 geführt. An der Betätigungsstange 11 ist im Inneren des Rohrkörpers 8 eine Druckfeder 13 vorgesehen, die mit ihrem einen Ende an die Scheibe 14 und mit ihrem anderen Ende an einen verstellbaren Anschlag 18 stößt.

Oberhalb des Verschlußdeckels 16 und diesen im verriegelten Zustand in den Rohrkörper 8 drückend, ist eine Verriegelungseinrichtung 12 vorgesehen, die aus einem Verriegelungsknebel 25 und an beiden Enden des Verriegelungsknebels 25 angeordneten Aufnahme- bzw. Feststelleinrichtungen 26 besteht. Der Verriegelungsknebel 25 ist durch eine entsprechende Bohrung in der Betätigungsstange 11 geführt, um diese in einer bestimmten Position festzuhalten. Mittels der Betätigungsstange 11, der Verriegelungseinrichtung 12 und der Druckfeder 13 kann die Verschlußplatte 10 entgegen der Kraft der Feder 13 im Abstand vom unteren Ende des Rohrkörpers 8 festgestellt werden, so daß der Rohrkörper 8 von dem zum Auslauf strömenden Klarwasser durchströmt wird und durch die nahe dem Verschlußdeckel 16 gelegenen Auslauföffnungen 20 aus dem Rohrkörper 8 austritt.

Nach dem Lösen der Verriegelungseinrichtung 12 wird die mit der Dichtung 21 versehene Verschlußplatte 10 durch die Druckfeder 13 gegen die untere Endfläche des Rohrkörpers 8 gedrückt, so daß ein geschlossenes Gefäß entsteht, das mit der eingeströmten Flüssigkeit gefüllt ist. Der so mit der Probeflüssigkeit gefüllte und durch die Verschlußplatte 10 verschlossene Rohrkörper 8 wird mit Hilfe des am oberen Ende der Betätigungsstange 11 befestigten Griffes 19 aus dem Auslaufkasten 5 entfernt. Nachdem die entnommene Probe der Untersuchung zugeführt wurde, kann der Rohrkörper 8 wieder in den Auslaufkasten 5 eingehängt werden und bis zur nächsten Probennahme mit Hilfe der Verriegelungseinrichtung 12 verriegelt werden, so daß der Rohrkörper 8 von dem Klarwasser wieder durchströmt wird.

## Patentansprüche

1. Abscheider zum Trennen von Flüssigkeitsgemischen, insbesondere zum Abscheiden von Leichtflüssigkeiten aus Wasser, bestehend aus einem Becken mit einem Einlauf, einem an diesen anschließenden Abscheidebereich ggf. mit Einbauten, einem vom Abscheidebereich zu einem Klarwasserablauf führenden Auslaufkasten und einer in einem oberen Bereich des Auslaufkastens gelegenen Probennahmeeinrichtung, dadurch gekennzeichnet, daß
die Probennahmeeinrichtung (7) aus einem vom Klarwasser in Längsrichtung durchströmten Rohrkörper (8) besteht, der lösbar an einer oberen Begrenzung (9) des Auslaufkastens (5) angeordnet ist, und daß der Rohrkörper (8) an seinem unteren Ende zur Probennahme durch eine Verschlußeinrichtung (10) in Durchströmrichtung verschließbar und in ein die Probe speicherndes Gefäß verwandelbar ist.

2. Abscheider nach Anspruch 1,
dadurch gekennzeichnet, daß die Verschlußeinrichtung (10) gegen die Kraft einer in Schließstellung wirkenden Feder (13) durch eine Verriegelungseinrichtung (12) in der geöffneten Stellung gehalten ist.

3. Abscheider nach Anspruch 1 oder 2,
dadurch gekennzeichnet, daß die Verschlußeinrichtung eine in Längsrichtung des Rohrkörpers (8) bewegbare Verschlußplatte (10) ist, die stirnseitig außerhalb des Rohrkörpers (8) angeordnet ist und in ihrem Durchmesser etwa dem Außendurchmesser des Rohrkörpers (8) entspricht.

4. Abscheider nach Anspruch 3,
dadurch gekennzeichnet, daß die Verschlußplatte (10) an einer durch den Rohrkörper (8) bis zu einer Oberkante des Abscheiders geführten Betätigungsstange (11) aufgehängt ist, mit der die Verriegelungseinrichtung (12) und die Druckfeder (13) zusammenwirkt.

5. Abscheider nach Anspruch 1,
dadurch gekennzeichnet, daß der Rohrkörper (8) in seinem Inneren an dem in dem Auslaufkasten (5) ragenden Ende eine mit Öffnungen (15) versehene Scheibe (14) besitzt, in der die Betätigungsstange (11) geführt ist.

6. Abscheider nach Anspruch 1,
dadurch gekennzeichnet, daß der Rohrkörper (8) einen oberen Verschlußdeckel (16) mit einem äußeren Flansch (17) aufweist, mit dem der Rohrkörper (8) in einer Öffnung der oberen Begrenzung (9) des Auslaufkastens (5) eingehängt ist, und in seiner Wandung nahe dem Verschlußdeckel (16) mindestens eine Auslauföffnung (20) besitzt.

7. Abscheider nach Anspruch 2 oder 4,
dadurch gekennzeichnet, daß die Verriegelungseinrichtung (12) an der oberen Begrenzung (9) oberhalb des Verschlußdeckels (16) befestigt ist und diesen an seiner Oberseite berührt.

8. Abscheider nach Anspruch 2 oder 4,
dadurch gekennzeichnet, daß die Druckfeder (13) an der Betätigungsstange (11) innerhalb des Rohrkörpers (8) angeordnet ist, wobei sie mit ihrem einen Ende an einen verstellbaren Anschlag (18) und mit ihrem anderen Ende an die Scheibe (14) stößt und nach dem Lösen der Verriegelungseinrichtung (12) die Verschlußplatte (10) gegen die untere Stirnfläche des Rohrkörpers (8) drückt.

9. Abscheider nach Anspruch 4,
dadurch gekennzeichnet, daß die Betätigungsstange (11) an ihrem oberen Ende einen Griff (19) besitzt.

10. Abscheider nach Anspruch 3,
dadurch gekennzeichnet, daß die Verschlußplatte (10) auf ihrer dem Rohrkörper (8) zugewandten Seite eine Dichtung (21) besitzt.

11. Abscheider nach einem der Ansprüche 1 bis 10,
dadurch gekennzeichnet, daß der Abscheider ein Koaleszenzabscheider ist.

12. Abscheider nach einem der Ansprüche 1 bis 10,
dadurch gekennzeichnet, daß der Abscheider ein Schwerkraftabscheider ist.
